# EUROPEAN PATENT APPLICATION

(11) **EP 4 811 046 A1**
(43) Date of publication of application: **23.09.2026**
(21) Application number: 26163691.4
(22) Date of filing: 10.03.2026
(51) Int. Cl.: G03G 15/08, G03G 15/00, G03G 21/18

(54) **IMAGE FORMING APPARATUS**

(30) Priority: 17.03.2025 JP 2025042692
(71) Applicant: Canon Kabushiki Kaisha, Tokyo 146-8501 (JP)
(72) Inventor: INOUE, Naoki, Tokyo, 146-8501 (JP)
(74) Representative: Canon Europe Limited

(57) **Abstract**

An image forming apparatus (100) includes an apparatus body (103), and a control unit (102) configured to acquire reuse information, toner information, and life information stored in the memory (M2) of the cartridge (10). The control unit (102) is configured to (i) in a case where the reuse information is acquired from the memory (M2), acquire second toner information related to an amount of toner of the cartridge (10) that has been reused, (ii) in a case where the first toner information is different from the second toner information, set second life information different from the first life information, and store the second life information in the memory (M2), the second life information being set according to the second toner information, and (iii) control a timing at which replacement of the cartridge (10) is prompted based on the second life information stored in the memory (M2).

## Description

### TECHNICAL FIELD

The present disclosure relates to an image forming apparatus that forms an image on a recording material.

### BACKGROUND

JP 2005-331539 A proposes an image forming apparatus in which a process cartridge is detachably attached to an apparatus body. The process cartridge includes a photosensitive drum, a charging roller, a developing sleeve, a developer container, a cleaning blade, and a waste toner container, which are integrally unitized. The process cartridge may be recycled after being collected by its manufacturer. The process cartridge includes a memory that stores information related to a life of each part of the process cartridge. A control unit provided in the apparatus body reads the information in the memory of the process cartridge, determines whether each part can be reused even after recycling, and records the determination result.

JP 2004-98564 A proposes an inkjet printer equipped with an ink cartridge including a memory chip. In the memory chip, data such as the amount of ink remaining in the ink cartridge and the manufacturing date of the ink cartridge are recorded. The data on the amount of remaining ink is updated every time printing is performed by the inkjet printer. Further, at the time of reuse, the data on the amount of remaining ink is rewritten from "empty" to "full" by a correction device.

The amount of toner accommodated in the original cartridge included in the image forming apparatus when shipped may be different from the amount of toner refilled in the cartridge when reused. The image forming apparatus may be controlled based on the amount of toner accommodated in the original cartridge. However, in a case where a reused cartridge is used, there is a risk that appropriate control is not performed because the amount of toner accommodated in the reused cartridge is different from that of the original cartridge.

### SUMMARY

The present disclosure in its one aspect provides an image forming apparatus as specified in claim 1. Optional features are specified in claim 2 to 11.

Features of the present disclosure will become apparent from the following description of embodiments with reference to the attached drawings. The following description of embodiments is described by way of example.

According to the present disclosure, appropriate control can be performed.

### BRIEF DESCRIPTION OF THE DRAWINGS

FIG. 1 is an overall schematic diagram illustrating a printer according to a first embodiment.
FIG. 2 is a block diagram illustrating a control configuration of an image forming apparatus.
FIG. 3 is a perspective view illustrating a storage device including two external contacts.
FIG. 4 is a diagram illustrating a configuration of a storage area of a storage unit according to the first embodiment.
FIG. 5 is a flowchart illustrating correction control.
FIG. 6 is a diagram illustrating a configuration of a storage area of a storage unit according to a second embodiment.
FIG. 7 is a diagram illustrating a correction table stored in a memory of an engine control unit.
FIG. 8 is a flowchart illustrating correction control.
FIG. 9 is a diagram illustrating a configuration of a storage area of a storage unit according to a third embodiment.
FIG. 10 is a diagram illustrating a correction group table stored in a memory of an engine control unit.
FIG. 11 is a flowchart illustrating correction control.

### DESCRIPTION OF THE EMBODIMENTS

Hereinafter, embodiments will be described in detail with reference to the accompanying drawings. Note that the following embodiments do not limit the invention according to the claims. Although a plurality of features is described in the embodiments, all of the plurality of features are not necessarily essential to the invention, and the plurality of features may be arbitrarily combined. Furthermore, in the accompanying drawings, the same or similar components are denoted by the same reference signs, and redundant description will be omitted.

### First Embodiment

### Overall Configuration

First, a first embodiment of the present disclosure will be described. The image forming apparatus 100 serving as an image forming apparatus is an electrophotographic laser beam printer that forms a monochrome toner image.

The image forming apparatus includes a printer, a copier, a facsimile, and a multifunction peripheral, and refers to an apparatus that forms an image on a sheet used as a recording medium based on image information input from an external PC or image information read from a document. In addition to a body having an image forming function, the image forming apparatus may be connected to accessory devices such as an option feeder, an image reading device, and a sheet processing device, and the entire system to which such accessory devices are connected is also a type of image forming apparatus.

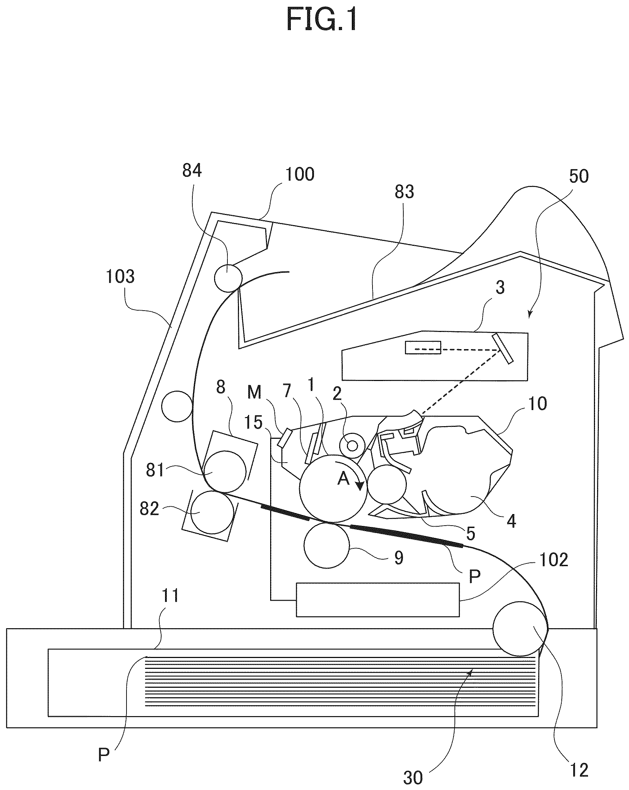

As illustrated in FIG. 1, the image forming apparatus 100 includes a sheet feeding unit 30 that feeds a supported sheet P, and an image forming unit 50 that forms an image on the fed sheet P. The image forming apparatus 100 includes a fixing unit 8 that fixes the image transferred to the sheet P, and a sheet discharge roller pair 84 capable of discharging the sheet P to a sheet discharge tray 83. An engine control unit 102 is provided in an apparatus body 103 of the image forming apparatus 100, and the engine control unit 102 controls each unit of the image forming apparatus 100 in order to form an image on the sheet P. Note that the image forming apparatus 100 does not necessarily include a process cartridge 10, which will be described below, of the image forming unit 50.

When an image forming command is output to the image forming apparatus 100, the image forming unit 50 starts an image forming process based on image information input from an external computer or the like connected to the image forming apparatus 100. The image forming unit 50 includes a process cartridge 10 serving as a cartridge, a laser scanner 3, and a transfer roller 9. The process cartridge 10 includes a photosensitive drum 1 that rotates in a direction indicated by an arrow A, a charging roller 2, a developing roller 5, and a cleaning blade 7, which are arranged along the photosensitive drum 1, and a toner container 4 serving as an accommodating portion that contains a toner. The developing roller 5 bears the toner and supplies the toner to the photosensitive drum 1. The process cartridge 10 is detachable from the apparatus body 103 of the image forming apparatus 100.

The laser scanner 3 irradiates the photosensitive drum 1 with laser light based on the input image information. At this time, the photosensitive drum 1 is charged in advance by the charging roller 2, and an electrostatic latent image is formed on the photosensitive drum 1 when irradiated with laser light. Thereafter, the electrostatic latent image is developed by the developing roller 5, and a monochrome toner image is formed on the photosensitive drum 1.

In parallel with the above-described image forming process, a sheet P is fed from the sheet feeding unit 30. The sheet feeding unit 30 includes a cassette 11 provided to be drawable from and insertable into the apparatus body 103. The sheet P accommodated in the cassette 11 is fed by a pickup roller 12 and conveyed toward a nip formed by the photosensitive drum 1 and the transfer roller 9.

The toner image formed on the photosensitive drum 1 is transferred to the sheet P by an electrostatic load bias applied to the transfer roller 9. The residual toner remaining on the photosensitive drum 1 is collected into a waste toner container 15 by the cleaning blade 7.

Predetermined heat and pressure are applied to the sheet P to which the toner image has been transferred by a heating roller 81 and a pressure roller 82 of the fixing unit 8, and the toner is melted and adheres (is fixed). The sheet P having passed through the fixing unit 8 is conveyed to the sheet discharge roller pair 84 and discharged to the sheet discharge tray 83 by the sheet discharge roller pair 84.

### Control Configuration of Image Forming Apparatus

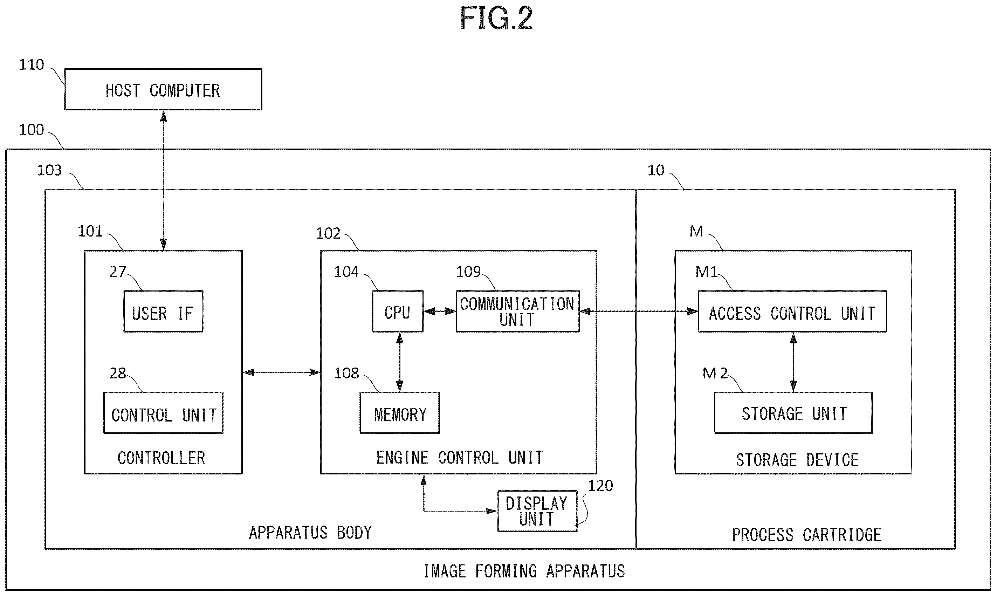

Next, a control configuration of the image forming apparatus will be described with reference to FIG. 2. FIG. 2 is a block diagram illustrating the control configuration of the image forming apparatus 100. Note that FIG. 2 illustrates only sections necessary for the description of the present disclosure, and sections not necessary for the description of the present disclosure are omitted.

The apparatus body 103 of the image forming apparatus 100 includes a controller 101, an engine control unit 102 serving as a control unit, and a display unit 120. The controller 101 includes a control unit 28 including one or more processors, memories, and the like, and a user interface (hereinafter, referred to as user IF) 27 for a user to operate the image forming apparatus 100. The control unit 28 controls the entire image forming apparatus 100. The user IF 27 functions as a reception unit that receives commands and setting values input by the user to the image forming apparatus 100, that is, as an input interface. Furthermore, the user IF 27 functions as a notification unit that presents and notifies the user of necessary information, that is, as an output interface. The display unit 120 includes a display and a physical key, and can display various messages and images on the display. Note that the display unit 120 may not be provided in the apparatus body 103, and may be provided in an information processing apparatus such as an external PC electrically connected to the image forming apparatus 100. That is, the image forming apparatus 100 may transmit a signal for displaying a message or an image to a display unit provided outside the image forming apparatus 100.

Under the control of the controller 101, a CPU 104 of the engine control unit 102 controls each unit of the image forming apparatus 100 to form an image on a sheet P. A memory 108 includes, for example, a volatile memory and a nonvolatile memory, and stores a program to be executed by the CPU 104 and various types of data to be used for control by the CPU 104. A communication unit 109 is configured to be able to communicate with an access control unit M1 of a storage device M provided in the process cartridge 10 when the process cartridge 10 is attached to the apparatus body 103. For example, the communication unit 109 has one or more external contacts. In addition, the storage device M has external contacts corresponding to the respective external contacts of the communication unit 109.

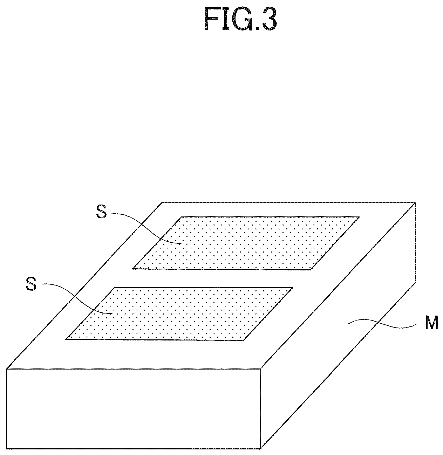

FIG. 3 is a perspective view illustrating the storage device M including two external contacts S. When the process cartridge 10 is attached to the apparatus body 103, one or more (e.g., two) external contacts of the communication unit 109 are electrically connected to the corresponding (e.g., two) external contacts S of the storage device M. The communication unit 109 and the access control unit M1 transmit and receive data/commands via this electrical connection. In the present embodiment, the storage device M has two external contacts S, but is not limited thereto. For example, the storage device M may have one external contact S, or may have three or more external contacts S.

As illustrated in FIG. 2, a storage unit M2 of the storage device M includes an electrically rewritable nonvolatile memory, for example, an electrically erasable programmable read only memory (EEPROM). The access control unit M1 may include, for example, a read-only memory (ROM) that stores a program, and a processor that executes the program.

The access control unit M1 writes information (data) to the storage unit M2 and reads information from the storage unit M2 based on instructions from the communication unit 109. For example, when the communication unit 109 instructs the access control unit M1 to read data stored at a predetermined address of the storage unit M2, the access control unit M1 reads the data stored at the predetermined address of the storage unit M2 and notifies the communication unit 109 of the read data. That is, the engine control unit 102 can acquire information stored in the storage unit M2 serving as a memory.

When the communication unit 109 notifies the access control unit M1 of data to be stored at a predetermined address of the storage unit M2, the access control unit M1 writes the data at the predetermined address of the storage unit M2. In this manner, the communication unit 109 functions as an access unit that accesses the storage device M and reads and updates information stored in the storage device M under the control of the CPU 104.

Note that the control unit 28 of the controller 101 is configured to be able to communicate with a host computer 110 outside the image forming apparatus 100 via a network. When receiving image data together with an image formation instruction from the host computer 110, the control unit 28 instructs the engine control unit 102 to form an image based on the image data.

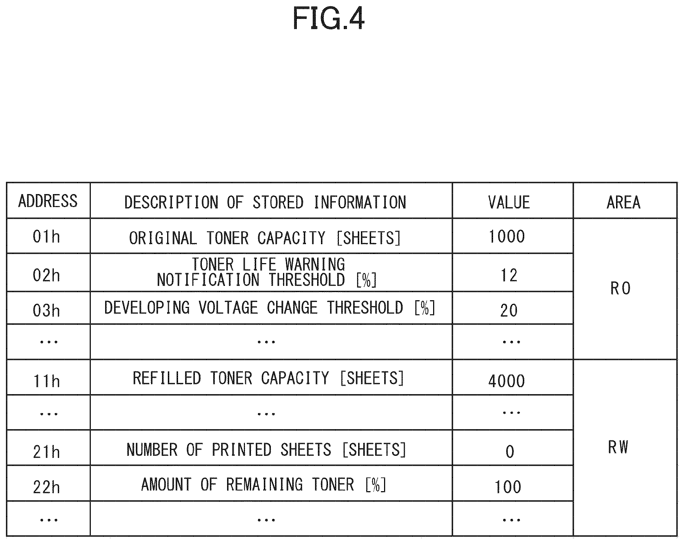

FIG. 4 is a diagram illustrating a configuration of a storage area of the storage unit M2 according to the present embodiment. In the storage unit M2, various information related to the process cartridge 10 is stored at each address. In the present embodiment, information to be stored in the process cartridge 10 is classified into two attributes. Then, the storage area of the storage unit M2 is divided into two areas, an RO area and an RW area, which correspond to the respective attributes. The read only (RO) area is an area where update of stored data (information) is prohibited, and is an example of a first area in which non-rewritable information is stored. The read write (RW) area is an area in which stored data (information) can be updated to any value, and is an example of a second area in which rewritable information is stored.

In this manner, the storage device M is configured such that the information stored in the RO area cannot be updated. On the other hand, there are no restrictions on updating the information in the RW area, and the storage device M is configured such that the information in the RW area can be updated to any value. An attribute of information prohibited from being updated is referred to as an RO attribute, and an attribute of information not prohibited from being updated and updated at the time of reuse or image formation is referred to as an RW attribute.

Information that does not need to be changed is stored in the RO area. For example, at address "01h" of the RO area, information (first toner information and first coloring material information) related to the amount of toner accommodated in the toner container 4 of the process cartridge 10 when the image forming apparatus 100 is shipped (hereinafter, referred to as original toner capacity) is stored. That is, the original toner capacity is toner information stored in advance in the storage unit M2.

At address "02h" of the RO area, a toner life warning notification threshold is stored as life information. The toner life warning notification threshold is a threshold of the amount of toner accommodated in the toner container 4 for causing the display unit 120 to display an indication (image) prompting replacement of the process cartridge 10. That is, when the amount of toner accommodated in the toner container 4 becomes equal to or smaller than the toner life warning notification threshold, the engine control unit 102 causes the display unit 120 to display an indication (image) prompting replacement of the process cartridge 10 and an indication prompting purchase of a new process cartridge 10. The toner life warning notification threshold may be calculated by the CPU 104 based on the original toner capacity or the refilled toner capacity and stored in the storage unit M2, or may be stored in advance in the storage unit M2. When the original toner capacity and the refilled toner capacity are different, the toner life warning notification threshold determined based on the original toner capacity is different from toner life warning notification threshold serving as first and third thresholds determined based on the refilled toner capacity.

At address "03h" of the RO area, a developing voltage change threshold is stored as life information. The developing voltage change threshold is a threshold of the amount of toner accommodated in the toner container 4 for changing the voltage (developing bias) applied to the developing roller 5. That is, when the amount of toner accommodated in the toner container 4 becomes equal to or smaller than the developing voltage change threshold, the engine control unit 102 changes the voltage applied to the developing roller 5. For example, a voltage obtained by adding a predetermined developing voltage offset from the reference voltage to the developing roller 5 is applied to the developing roller 5. As a result, even if the amount of toner accommodated in the toner container 4 decreases, the supply of the toner from the developing roller 5 to the photosensitive drum 1 can be stabilized, and the density of the toner image formed on the photosensitive drum 1 can be stabilized. The toner life warning notification threshold and the developing voltage change threshold are examples of control information for controlling the image forming apparatus 100. The developing voltage change threshold may be calculated by the CPU 104 based on the original toner capacity or the refilled toner capacity and stored in the storage unit M2, or may be stored in advance in the storage unit M2. When the original toner capacity and the refilled toner capacity are different, the developing voltage change threshold determined based on the original toner capacity is different from a developing voltage change threshold serving as a second threshold determined based on the refilled toner capacity.

At address "11h" of the RW area, information (second toner information) related to the amount of toner accommodated in the toner container 4 by filling the toner container 4 with the toner after the image forming apparatus 100 is shipped (hereinafter, referred to as refilled toner capacity) is stored. In the present embodiment, the original toner capacity and the refilled toner capacity described above are indicated by the number of printable sheets, but may also be indicated by weight or volume.

At address "21h" of the RW area, the number of printed sheets after the image forming apparatus 100 is shipped or reused is stored. At address "22h" of the RW area, an amount of remaining toner accommodated in the toner container 4 of the process cartridge 10 is stored. The amount of remaining toner can be calculated from the original toner capacity or the refilled toner capacity and the number of printed sheets. The refilled toner capacity is an example of reuse information, which is information related to the reused process cartridge 10, and the number of printed sheets and the amount of remaining toner are examples of usage information relating to the usage status of the process cartridge 10.

In each piece of information in the storage unit M2, an initial value is stored when the image forming apparatus 100 is shipped or reused. The image forming apparatus 100 according to the present embodiment can use a small-capacity cartridge, a medium-capacity cartridge, and a large-capacity cartridge. The small-capacity cartridge, the medium-capacity cartridge, and the large-capacity cartridge are filled with toners in amounts allowing 1000 sheets, 2000 sheets, and 4000 sheets, respectively, to be printed. Note that a small-capacity cartridge is included in the image forming apparatus 100 when shipped.

The values shown in the table of FIG. 4 are examples of initial values when the process cartridge 10 is reused. An initial value corresponding to the amount of refilled toner is written in the refilled toner capacity. That is, the example of FIG. 4 shows that the image forming apparatus 100 is filled with a toner in an amount allowing 1000 sheets to be printed when shipped, and is filled with a toner in an amount allowing 4000 sheets to be printed when reused. In addition, values, 0 [sheets] and 100 [%], which are the same values as those when the image forming apparatus 100 is shipped, are written in the number of printed sheets and the amount of remaining toner, respectively.

### Correction Control

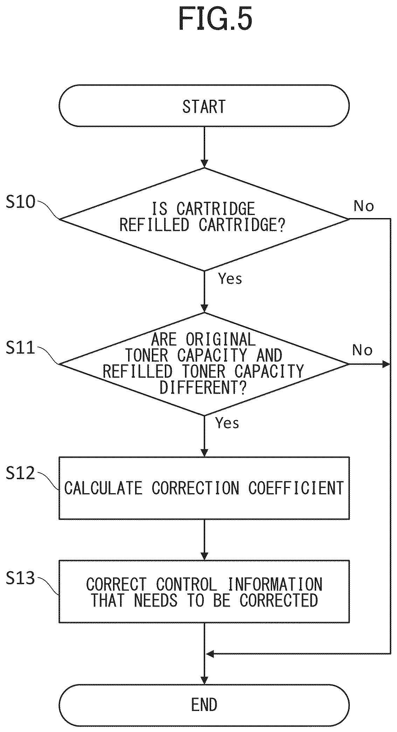

Next, correction control for controlling the image forming apparatus 100 by correcting control information will be described with reference to FIG. 5. FIG. 5 is a flowchart illustrating correction control. As illustrated in FIG. 5, the CPU 104 of the engine control unit 102 reads information stored in the storage unit M2 of the storage device M of the process cartridge 10 in a state where the process cartridge 10 is attached to the apparatus body 103. Then, the CPU 104 determines whether the process cartridge 10 attached to the apparatus body 103 is a reused process cartridge 10, that is, a process cartridge 10 refilled with a toner (step S10). For example, when the image forming apparatus 100 is shipped, the value of refilled toner capacity is set to 0, and when the value of refilled toner capacity is other than 0, it can be determined to be a process cartridge 10 refilled with a toner. In other words, the reuse information can be said to indicate that the refilled toner capacity stored in the storage unit M2 is different from the original toner capacity. In addition, in the RW area, reuse information (reuse bit) indicating that the process cartridge 10 is reused may be stored separately from the refilled toner capacity. That is, the reuse information may be information independent of the original toner capacity and the refilled toner capacity. The CPU 104 can determine that the process cartridge 10 has been reused by reading the reuse information stored in the storage unit M2. In other words, the CPU 104 determines that the information regarding reuse has been acquired.

When it is not determined to be a process cartridge 10 refilled with a toner (step S10: No), the CPU 104 ends the correction control. When it is determined to be a process cartridge 10 refilled with a toner (step S10: Yes), the CPU 104 determines whether the original toner capacity and the refilled toner capacity are different (step S11). When it is determined that the original toner capacity and the refilled toner capacity are equal (step S11: No), the CPU 104 ends the correction control.

When it is determined that the original toner capacity and the refilled toner capacity are different (step S11: Yes), the CPU 104 calculates a correction coefficient (step S12). In the present embodiment, the correction coefficient corresponds to a ratio between the original toner capacity and the refilled toner capacity. For example, in a case where the value of original toner capacity is 1000 [sheets] and the value of refilled toner capacity is 4000 [sheets], the CPU 104 calculates the correction coefficient as 4.

Then, the CPU 104 corrects the control information that needs to be corrected by using the correction coefficient calculated in step S12, and controls the control target of the image forming apparatus 100 (step S13). For example, in a case where the original toner capacity is 1000 [sheets] and the toner life warning notification threshold is 12 [%], when the number of remaining printable sheets reaches 120 [sheets], the CPU 104 causes the display unit 120 to display a message prompting replacement of the process cartridge 10. On the other hand, in a case where a reused process cartridge 10 is used with the refilled toner capacity being 4000 [sheets], the CPU 104 divides 12 [%], which is the toner life warning notification threshold, by 4, which is a correction coefficient, and corrects the toner life warning notification threshold to 3 [%]. Then, when the number of remaining printable sheets reaches 120 [sheets] obtained by 4000 [sheets] × 3 [%], the CPU 104 causes the display unit 120 serving as a control target to display a message prompting replacement of the process cartridge 10. As a result, it is possible to control the display unit 120 to display a message prompting replacement of the process cartridge 10 at an appropriate timing.

In a case where a reused process cartridge 10 is used with the developing voltage change threshold being 20 [%] at the time of shipment, the CPU 104 divides 20 [%], which is the developing voltage change threshold, by 4, which is a correction coefficient, and corrects the developing voltage change threshold to 5 [%]. Then, when the number of remaining printable sheets reaches 200 [sheets] obtained by 4000 [sheets] × 5 [%], the CPU 104 changes the voltage (developing bias) to be applied to the developing roller 5 serving as a control target. As a result, it is possible to perform control for changing the voltage (developing bias) to be applied to the developing roller 5 at an appropriate timing.

As described above, in the present embodiment, even when the original toner capacity and the refilled toner capacity are different, the control information read from the storage unit M2 of the process cartridge 10 is corrected using the original toner capacity and the refilled toner capacity. More specifically, the CPU 104 of the engine control unit 102 calculates a correction coefficient corresponding to a ratio between the original toner capacity and the refilled toner capacity, and divides each type of control information by the correction coefficient. As a result, it is possible to control the timing at which replacement of the process cartridge 10 is prompted, for example, based on the toner life warning notification threshold. More specifically, when the amount of toner accommodated in the toner container 4 of the process cartridge 10 becomes equal to or smaller than the toner life warning notification threshold, an indication prompting replacement of the process cartridge 10 is displayed on the display unit 120. In addition, when the amount of toner accommodated in the toner container 4 of the process cartridge 10 becomes equal to or smaller than the developing voltage change threshold, the voltage applied to the developing roller 5 is changed. Therefore, the control target of the image forming apparatus 100 can be appropriately controlled.

In addition, by using the correction coefficient, the control information can be appropriately corrected even if the original toner capacity and the refilled toner capacity are not predetermined capacities such as a small capacity, a medium capacity, and a large capacity. That is, the degree of freedom of the toner capacity of the process cartridge 10 can be improved.

In the present embodiment, since the control information (toner life warning notification threshold and developing voltage change threshold) indicates a threshold for a decreasing value of amount of remaining toner (toner life), the control information is divided by the correction coefficient when corrected, but the correction of the control information is not limited thereto. For example, control information such as a threshold for an increasing value may be corrected by multiplying the control information by a correction coefficient.

In addition, in the present embodiment, the correction coefficient for the toner capacity is calculated from the ratio between the original toner capacity and the refilled toner capacity, but the calculation of the correction coefficient is not limited thereto. For example, the correction coefficient may be calculated from life information for each of the components included in the process cartridge 10, such as the photosensitive drum 1 and the developing roller 5. In addition, the control information associated with each component may be corrected using a correction coefficient.

### Second Embodiment

Next, a second embodiment of the present disclosure will be described. In the second embodiment, control information is corrected by a method different from that of the first embodiment. Therefore, configurations of the second embodiment similar to those of the first embodiment will not be illustrated or will be described with the same reference signs being given in the drawings.

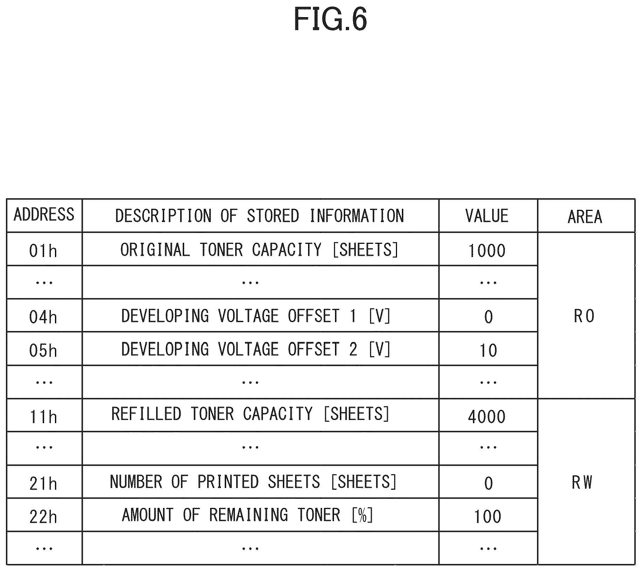

FIG. 6 is a diagram illustrating a configuration of a storage area of the storage unit M2 according to the second embodiment. As illustrated in FIG. 6, developing voltage offset 1 is stored at address "04h" of the RO area, and developing voltage offset 2 is stored at address "05h" of the RO area. The developing voltage offset 1 and the developing voltage offset 2 are examples of control information according to the second embodiment.

The developing voltage offset is a value indicating a difference (offset amount) from the reference voltage applied to the developing roller 5. In the present embodiment, first, a developing voltage is set based on the developing voltage offset 1, and when the developer (toner) is consumed to some extent, a developing voltage is set based on the developing voltage offset 2. That is, as the number of printed sheets increases and the consumption of the toner progresses, the image density becomes unstable due to deteriorations of the photosensitive drum 1, the developing roller 5, the charging roller 2, and the toner.

Therefore, in the present embodiment, the voltage applied to the developing roller 5 is increased from the reference voltage by a value indicated by the developing voltage offset 1 or the developing voltage offset 2. As a result, the image density can be stabilized, suppressing image defects.

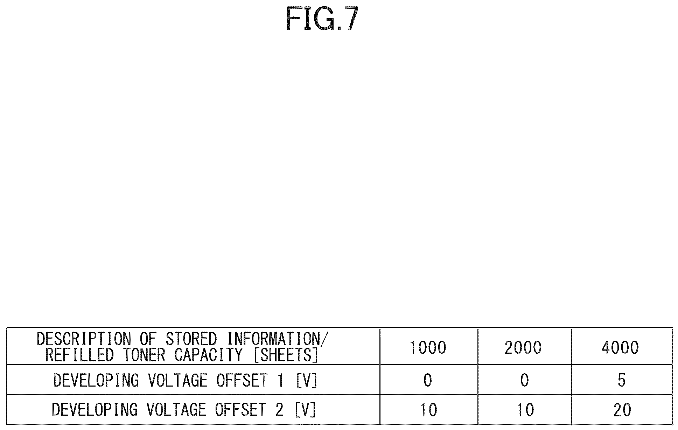

FIG. 7 is a diagram illustrating a correction table stored in the memory 108 of the engine control unit 102. In the correction table, the developing voltage offsets 1 are set to 0 [V], 0 [V], and 5 [V] to correspond to the refilled toner capacities of 1000 [sheets], 2000 [sheets], and 4000 [sheets], respectively. In addition, in the correction table, the developing voltage offsets 2 are set to 10 [V], 10 [V], and 20 [V] to correspond to the refilled toner capacities of 1000 [sheets], 2000 [sheets], and 4000 [sheets], respectively. That is, the voltage applied to the developing roller 5 is changed based on the refilled toner capacity.

In the present embodiment, the correction table is used in which the refilled toner capacities are 1000 sheets, 2000 sheets, and 4000 sheets to correspond to a small-capacity cartridge, a medium-capacity cartridge, and a large-capacity cartridge, respectively, but the correction table is not limited thereto. For example, the refilled toner capacities may be set to any value at one or two levels or at four or higher levels, instead of the above-described three levels.

When the refilled toner capacity is 4000 [sheets] corresponding to a large-capacity cartridge, the time during which the process cartridge 10 is attached to the apparatus body 103 tends to be long. For this reason, there is a possibility that image quality may deteriorate due to deteriorations in charging characteristics of each component of the process cartridge 10 and the toner. For example, the RO area of the storage unit M2 includes a second developing voltage change threshold [%] in addition to the developing voltage change threshold [%] at address "03h". The second developing voltage change threshold [%] may be arbitrarily set, but is set to, for example, 60 [%]. In a case where an original cartridge is attached to the apparatus body 103, when the number of remaining printable sheets reaches 20 [%] of the original toner capacity [sheets], the CPU 104 applies, to the developing roller 5, a voltage obtained by adding the developing voltage offset 2 from the reference voltage to the developing roller 5. In the examples illustrated in FIGS. 6 and 7, since the original toner capacity [sheets] is 1000 [sheets], even if the number of remaining printable sheets becomes 60 [%] of the original toner capacity [sheets], the developing voltage offset 1 [V], which is a voltage added to the developing roller 5 from the reference voltage, is 0 [V]. In a case where a reused process cartridge 10 is attached to the apparatus body 103, as in the first embodiment, the developing voltage change threshold [%] and the second developing voltage change threshold [%] are corrected. That is, in a case where the refilled toner capacity is 4000 [sheets], when the number of remaining printable sheets becomes 4000 [sheets] × 60 [%] ÷ 4 = 600 [sheets], the CPU 104 applies, to the developing roller 5, a voltage obtained by adding the developing voltage offset 1, that is, 5 [V], from the reference voltage to the developing roller 5. The timing at which the developing voltage offset 1 is added to the reference voltage does not need to be corrected using the correction coefficient, and may be simply defined by the number of remaining printable sheets [sheets].

In addition to the control of the developing voltage, control information for extending the life of the process cartridge 10, such as toner stirring control for preventing toner fusion due to the internal temperature of the image forming apparatus 100, may be stored in the storage unit M2 of the refilled process cartridge 10.

In addition, control information for executing control suitable for the original cartridge may be stored in the storage unit M2 of the small-capacity cartridge included in the image forming apparatus 100 when shipped. On the other hand, control information for not executing control suitable for the original cartridge may be stored in the storage unit M2 of the medium-capacity cartridge or the large-capacity cartridge.

### Correction Control

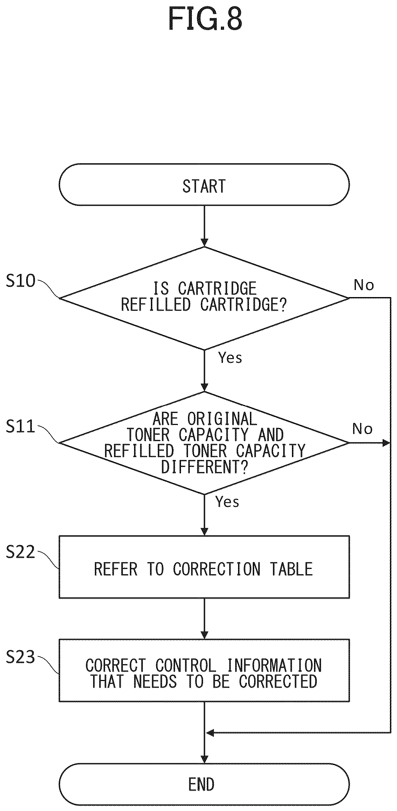

Next, correction control for controlling the image forming apparatus 100 by correcting control information will be described with reference to FIG. 8. FIG. 8 is a flowchart illustrating correction control according to the second embodiment. Since steps S10 and S11 have been described with reference to FIG. 5 in the first embodiment, the description thereof will be omitted.

When it is determined that the original toner capacity and the refilled toner capacity are different (step S11: Yes), the CPU 104 refers to a correction table stored in the memory 108 (step S22). In the present embodiment, the correction table is a table showing correction values for correcting control information in a table format.

Then, the CPU 104 corrects the control information that needs to be corrected using the correction table referred to in step S22, and controls the control target of the image forming apparatus 100 (step S23). For example, in a case where a reused process cartridge 10 is used with the refilled toner capacity being 4000 [sheets], the CPU 104 corrects the developing voltage offset 1 and the developing voltage offset 2 to 5 [V] and 20 [V], respectively. That is, the voltage applied to the developing roller 5 is changed based on the amount of toner accommodated in the toner container 4 of the process cartridge 10 attached to the apparatus body 103 and the refilled toner capacity. As a result, the developing voltage applied to the developing roller 5 serving as a control target can be appropriately changed, thereby appropriately controlling the developing roller 5.

As described above, in the present embodiment, even when the original toner capacity and the refilled toner capacity are different, the control information read from the storage unit M2 of the process cartridge 10 is corrected with reference to the correction table stored in the memory 108. At this time, the CPU 104 determines that the cartridge is a process cartridge 10 refilled with a toner using the original toner capacity and the refilled toner capacity (step S10), and specifies the reference value of the correction table using the refilled toner capacity.

By using the correction table in this manner, it is possible to correct control information that cannot be corrected using a correction coefficient as in the first embodiment. For example, even control information such as the developing voltage offset 1 and the developing voltage offset 2, which are not related to the toner life, can be appropriately corrected.

In the present embodiment, the refilled toner capacity described in the correction table matches the refilled toner capacity stored in the storage unit M2, but they are not limited thereto. For example, when the refilled toner capacity described in the correction table does not match the refilled toner capacity stored in the storage unit M2, the CPU 104 may refer to a correction value corresponding to a refilled toner capacity closest to the refilled toner capacity stored in the storage unit M2 from the correction table.

### Third Embodiment

Next, a third embodiment of the present disclosure will be described. The third embodiment is a combination of the correction control of the first embodiment and the correction control of the second embodiment. Therefore, configurations of the third embodiment similar to those of the first embodiment and the second embodiment will not be illustrated or will be described with the same reference signs being given in the drawings.

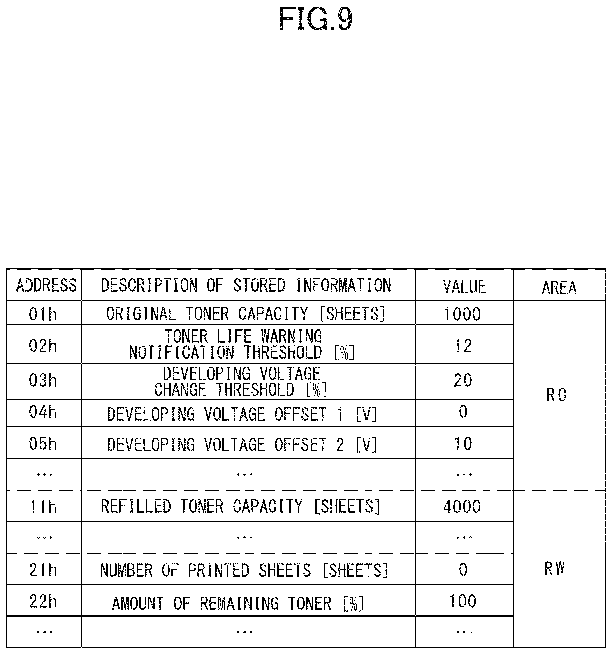

FIG. 9 is a diagram illustrating a configuration of a storage area of the storage unit M2 according to the third embodiment. As illustrated in FIG. 9, an original toner capacity, a toner life warning notification threshold, a developing voltage change threshold, a developing voltage offset 1, and a developing voltage offset 2 are stored at addresses "01h", "02h", "03h", "04h", and "05h", respectively, of the RO area. The detailed description thereof has already been given in the first embodiment and the second embodiment, and thus is omitted. The original toner capacity, the toner life warning notification threshold, the developing voltage change threshold, the developing voltage offset 1, and the developing voltage offset 2 are examples of control information according to the third embodiment.

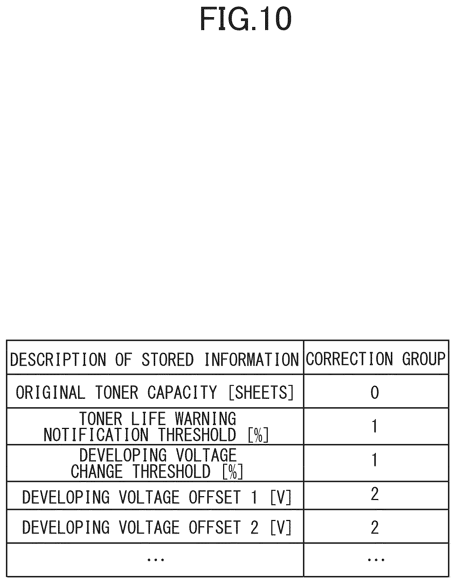

FIG. 10 is a diagram illustrating a correction group table stored in the memory 108 of the engine control unit 102. In the correction group table, a correction group indicating a correction method for each type of control information stored in the storage unit M2 is described. As illustrated in FIG. 10, when the correction group is "0", this indicates that the control information is not corrected. When the correction group is "1", this indicates that the control information is corrected using the correction coefficient as in the first embodiment. When the correction group is "2", this indicates that the control information is corrected using the correction table as in the second embodiment.

In FIG. 10, the correction groups of the original toner capacity, the toner life warning notification threshold, the developing voltage change threshold, the developing voltage offset 1, and the developing voltage offset 2 are "0", "1", "1", "2", and "2", respectively. The toner life warning notification threshold and the developing voltage change threshold, of which the correction group is "1", correspond to first control information that can be corrected using the correction coefficient. The developing voltage offset 1 and the developing voltage offset 2, of which the correction group is "2", correspond to second control information that can be corrected using the correction table as the correction value.

### Correction Control

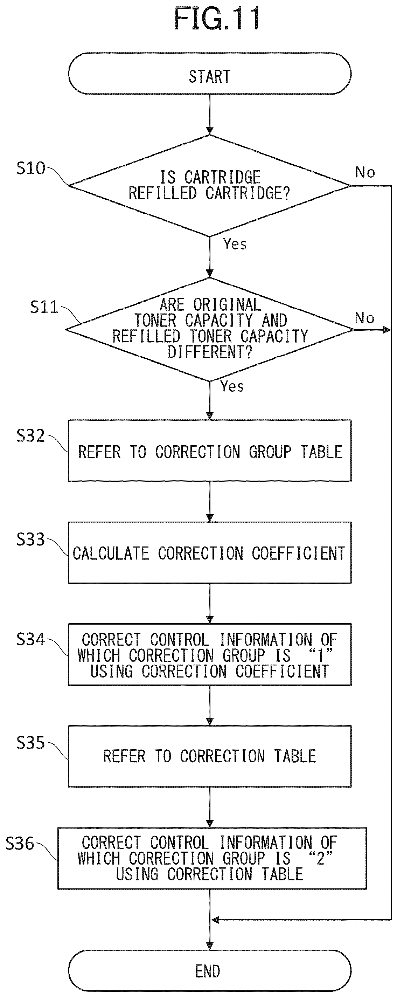

Next, correction control for controlling the image forming apparatus 100 by correcting control information will be described with reference to FIG. 11. FIG. 11 is a flowchart illustrating correction control according to the third embodiment. Since steps S10 and S11 have been described with reference to FIG. 5 in the first embodiment, the description thereof will be omitted.

When it is determined that the original toner capacity and the refilled toner capacity are different (step S11: Yes), the CPU 104 refers to a correction group table illustrated in FIG. 10 (step S32). Next, the CPU 104 calculates a correction coefficient as in step S12 (see FIG. 5) of the first embodiment (step S33). Then, the CPU 104 corrects the control information of which the correction group is "1" using the correction coefficient calculated in step S33, and controls the control target of the image forming apparatus 100 (step S34).

Further, the CPU 104 refers to the correction table illustrated in FIG. 7 as in the second embodiment (step S35). Then, the CPU 104 corrects the control information of which the correction group is "2" using the correction table referred to in step S35, and controls the control target of the image forming apparatus 100 (step S36).

As described above, in the present embodiment, even when the original toner capacity and the refilled toner capacity are different, the control information read from the storage unit M2 of the process cartridge 10 is classified into correction groups and appropriately corrected. More specifically, control information of which the correction group is "1" is corrected using a correction coefficient, and control information of which the correction group is "2" is corrected using a correction table. As a result, although the correction table is enlarged, for example, when the types of control information or the types of toner amounts increase, the enlargement of the correction table can be suppressed by combining the correction of the control information using the correction coefficient.

Note that steps S35 and S36 in FIG. 11 may be performed before steps S33 and S34, or may be performed simultaneously with steps S33 and S34.

### Other Embodiments

In any of the embodiments described above, the electrophotographic image forming apparatus 100 has been described, but the present disclosure is not limited thereto. For example, the present disclosure can also be applied to an inkjet type image forming apparatus that forms an image on a sheet by ejecting ink liquid from a nozzle. For example, an original ink capacity related to the amount of coloring material at the time of shipment, a refilled ink capacity related to the amount of coloring material at the time of reuse, and control information are stored in a storage unit provided in an ink cartridge serving as a cartridge. The ink cartridge includes an accommodating portion that accommodates an ink serving as a coloring material. Then, when the original ink capacity serving as first coloring material information and the refilled ink capacity serving as second coloring material information are different, the control unit of the image forming apparatus corrects the control information using the original ink capacity and the refilled ink capacity, and controls the control target (the display unit 120, the nozzle head, or the like). As in the first embodiment, the control information may be an ink life warning notification threshold for prompting replacement of the ink cartridge or the like.

The technology described herein may contribute to realizing a sustainable society such as a decarbonized/recycling-based society.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image forming apparatus (100) comprising:
an apparatus body (103) to which a cartridge (10) including an accommodating portion (4) configured to accommodate toner and a memory (M2) can be detachably attached; and
a control unit (102) configured to acquire reuse information, toner information, and life information stored in the memory (M2) of the cartridge (10),
wherein the toner information relates to an amount of toner accommodated in the accommodating portion (4) and includes first toner information, and the life information is related to a life of the cartridge and includes first life information corresponding to the first toner information, and
wherein the control unit (102) is configured to:
(i) in a case where the reuse information is acquired from the memory (M2), acquire second toner information related to an amount of toner accommodated in the accommodating portion (4) of the cartridge (10) that has been reused;
(ii) in a case where the first toner information is different from the second toner information, set second life information different from the first life information, and store the second life information in the memory (M2), the second life information being set according to the second toner information; and
(iii) control a timing at which replacement of the cartridge (10) is prompted based on the second life information stored in the memory (M2).

2. The image forming apparatus (100) according to claim 1, wherein the control unit (102) is configured to set the second life information based on a ratio between the first toner information and the second toner information.

3. The image forming apparatus (100) according to claim 1 or 2, further comprising a display unit (120),
wherein the second life information includes a first threshold, and
the control unit (102) is configured to, in a case where the amount of toner accommodated in the accommodating portion (4) becomes equal to or smaller than the first threshold, cause the display unit (120) to display an indication prompting replacement of the cartridge (10).

4. The image forming apparatus (100) according to any one of claims 1 to 3, wherein the cartridge (10) includes a developing roller (5) configured to bear the toner accommodated in the accommodating portion (4),
the second life information includes a second threshold, and
the control unit (102) is configured to, in a case where the amount of toner accommodated in the accommodating portion (4) becomes equal to or smaller than the second threshold, change a voltage applied to the developing roller (5).

5. The image forming apparatus (100) according to any one of claims 1 to 3, wherein the cartridge (10) includes a developing roller (5) configured to bear the toner accommodated in the accommodating portion (4), and
the control unit (102) is configured to change a voltage applied to the developing roller (5) based on the second toner information.

6. The image forming apparatus (100) according to claim 5, wherein the control unit (102) is configured to change the voltage applied to the developing roller (5) based on the amount of toner accommodated in the accommodating portion (4), and the second toner information.

7. The image forming apparatus (100) according to claim 1 or 2, further comprising a display unit (120),
wherein the cartridge (10) includes a developing roller (5) configured to bear the toner accommodated in the accommodating portion (4),
the second life information includes a third threshold, and
the control unit (102) is configured to:
(i) in a case where the amount of toner accommodated in the accommodating portion (4) becomes equal to or smaller than the third threshold, cause the display unit (120) to display an indication prompting replacement of the cartridge (10); and
(ii) change a voltage applied to the developing roller (5) based on the amount of toner accommodated in the accommodating portion (4), and the second toner information.

8. The image forming apparatus (100) according to any one of claims 1 to 7, wherein the reuse information is acquired by determining whether the second toner information stored in the memory (M2) is different from the first toner information.

9. The image forming apparatus (100) according to any one of claims 1 to 8, further comprising the cartridge (10) including the accommodating portion (4) configured to accommodate toner and the memory (M2) configured to store the reuse information, the toner information and the life information.

10. The image forming apparatus (100) according to claim 9, wherein the memory (M2) includes a first area (RO) in which non-rewritable information is stored, and a second area (RW) in which rewritable information is stored,
wherein the first toner information is stored in the first area (RO) of the memory (M2), and
wherein the second toner information is stored in the second area (RW) of the memory (M2).

11. The image forming apparatus (100) according to claim 9, wherein the reuse information is stored independently from the first toner information and the second toner information, and indicates that the cartridge (10) has been reused.
